# FASCICULE DE BREVET EUROPEEN

(11) **EP 2 887 657 B1**
(45) Date de publication et mention de la délivrance du brevet: **22.05.2019**
(21) Numéro de dépôt: 14195079.0
(22) Date de dépôt: 27.11.2014
(51) Int. Cl.: H04N 9/31, G03B 21/13, G03B 17/54, G03B 37/04

(54) **Fondu enchainé électro-optique**
Elektrooptisches Überblenden
Electro-optical crossfading

(30) Priorité: 18.12.2013 FR 1302979
(43) Date de publication de la demande: 24.06.2015
(73) Titulaire: Thales, 92400 Courbevoie (FR)
(72) Inventeur: Fontaine, Jean-Jacques, 95610 ERAGNY-SUR-OISE (FR); Cavrois, Eric, 95520 OSNY (FR)
(74) Mandataire: Lucas, Laurent Jacques

(56) Documents cités:
- EP-A1- 0 829 747
- EP-A1- 1 710 621
- EP-A2- 1 134 610
- JP-A- 2000 194 065

## Description

### Domaine de l'invention

L'invention concerne le domaine des méthodes et systèmes de projection d'images et en particulier le domaine de la projection d'images multiples.

### Etat de la Technique

Certaines pratiques industrielles ou sociales nécessitent parfois la projection d'images sur de grandes surfaces, par exemple pour de l'événementiel (compétitions sportive, cinéma en plein air) ou dans le cas de l'utilisation d'équipements de réalité virtuelle (maquettage ou encore simulateurs de vol). Ces surfaces importantes nécessitent en général de recourir à plusieurs projecteurs.

Toutefois, lorsque plusieurs images sont projetées sur un même support (i.e. un écran de projection), il s'opère un recouvrement des images. Dans la zone dite de recouvrement, les flux lumineux en provenance des deux projecteurs se cumulent et la zone devient trop lumineuse.

Dans les applications grand public, ce problème technique est parfois résolu par des moyens électroniques, consistant à modifier le niveau vidéo des images dans les zones de recouvrement, par exemple en abaissant la luminosité à 50% pour chaque partie du recouvrement. Cette solution parfois appelée "fondu enchaîné électronique" est alors implémentée directement dans le projecteur vidéo (ou dans un boitier externe). Un tel système est efficace pour des images lumineuses (par exemple des prises de vue de jour en extérieur) mais ne donne pas satisfaction sur des images sombres, des images de scènes de nuit par exemple, car les projecteurs modernes à base de valve à lumière (projecteurs *Liquid-Crystal Display* LCD, *Liquid crystal on Silicon LCoS* et *Digital Light Processing* DLP) laissent toujours passer un peu de lumière même en l'absence de signal vidéo. Les zones de recouvrement de plusieurs images restent donc sur-lumineuses (les flux lumineux s'ajoutant), phénomène connu sous le nom de "noirs multiples". Ce problème technique est particulièrement aigu et pénalisant pour les simulateurs de vol, pour lesquels les simulations dans des conditions nocturnes sont courantes.

Pour éviter ce phénomène il est parfois installé devant chaque projecteur un masque de type mécanique, amovible ou non, de forme adéquate (afin d'obtenir la projection d'une zone floue) ou un masque de type optique (par exemple une zone de dégradé de gris gravé sur du verre ou sur un film photographique), afin d'obtenir la projection d'un dégradé de gris.

Ces solutions résolvent le problème technique initial mais sont difficiles à configurer et ne fonctionnent que pour un jeu de paramètres donnés: un projecteur, une optique avec une seule valeur de zoom et une seule valeur de mise au point, une seule distance de projection.

Le système de fondu enchaîné électronique est satisfaisant pour les utilisations avec des images lumineuses. Par contre, pour les images sombres, les solutions techniques actuelles ne sont pas satisfaisantes.

L'invention proposée dans le présent document permet de répondre à ces besoins, au moins en partie.

### Résumé de l'invention

L'invention consiste à créer un masque de fondu enchaîné sous forme d'une ou de plusieurs images (" image-masques" ou "images intermédiaires" ou "images filtres"), lesdites images étant affichées sur un "masque dynamique". Ce masque dynamique peut être réalisé de différentes façons. Le terme dynamique exprime le fait que le masque est évolutif, peut être changé, peut être commandé voire asservi. Le terme sous-entend que le temps de latence pour aboutir à un changement d'image dans le masque dynamique est suffisamment court pour permettre d'obtenir les effets techniques recherchés.

Dans un mode de réalisation, le masque dynamique est un "écran transparent". Un écran est un dispositif mettant en oeuvre une technique d'affichage d'image. De grands constructeurs ont annoncé dès 2012 des "écrans transparents", par exemple OLED (afficheur T-OLED) ou LCD. La disponibilité d'écrans "souples" et/ou "flexibles", voire "pliables" et "étirables" ont également été annoncés. Se présentant comme des vitres ou des plaques de verre, ces écrans possèdent une capacité d'occultation configurable, depuis la transparence quasi-totale jusqu'à l'opacité quasi-totale et servent à de multiples applications (pare-brise de voiture, événementiel, stores, etc). Des écrans *Liquid Crystal Display* LCD (de technologies TN, DSTN, TFT-LCD, IPS, S-IPS, MVA, PVA, etc), *Organic light-emitting diode* OLED, *Surface-conduction Electron-emitter Display* SED, ou encore *Polymer Light-Emitting Diodes* PLED peuvent être utilisés par exemple (non exhaustif).

Dans un mode de réalisation, une image-masque (par exemple en dégradé de gris) est affiché sur ledit masque dynamique interposé entre la pluralité de projecteurs et l'écran de projection.

Dans un mode de réalisation, une unique image statique est affichée sur le masque dynamique ou (écran vidéo transparent). Dans un autre mode de réalisation, une pluralité d'images statiques est générée et affichée. L'expression "une pluralité d'images statiques" recouvre aussi bien l'utilisation de vidéo (frames vidéo successives à un taux de rafraichissement ou frame rate important) que des séquences plus lente ("*slideshow*") d'images fixes. Par exemple, lors du passage d'une simulation de jour à une simulation de nuit, ou lors de changements de scène lors d'une simulation au sol, il ne peut être besoin que de peu de changements en matière de masque vidéo.

Dans un autre mode de réalisation, un flux vidéo (pluralité d'images "dynamiques") est généré et affichée en temps réel de façon à s'adapter au contenu des images projetées.

Les différents modes de réalisation de l'invention résolvent bien le problème technique de raccord en luminosité de plusieurs images, (phénomène de "fondu-enchaîné"). Selon l'invention, la projection d'images sombres (images de scènes de nuit par exemple) ne présente plus l'inconvénient récurrent des « noirs multiples ».

La "correction d'affichage" ou la "minimisation des défauts d'affichage" ou la "modification/compensation de l'affichage" associée à la zone de recouvrement désigne une ou plusieurs modifications résultant en une minimisation des défauts graphiques ou visuels, tels que des défauts de luminance, de raccords, de pixellisation, de sur-luminosités, de noirs multiples, etc.

Avantageusement, dans certaines configurations, les problèmes techniques de placement des dispositifs de masque par rapport à la position du projecteur et à l'écran sont supprimés. Avantageusement, selon certains modes de réalisation de l'invention, il n'est plus besoin de régler le masque ni de positionner précisément masque dynamique entre le projecteur et l'écran.

Avantageusement, une ou plusieurs images peuvent être déplacées (et non pas le masque lui-même). En d'autres termes, la génération d'images - masque intermédiaire pallie le manque de flexibilité des supports physiques. Avantageusement une ou plusieurs de ces images intermédiaires peuvent être modifiées en fonction des paramètres de projection (tel que une autre valeur de zoom, une autre valeur de diaphragme). Cette modification pouvant éventuellement être faite en temps réel, pilotée par exemple par un moyen extérieur pilotant aussi le projecteur.

Les avantages liés aux modes de réalisation de l'invention sont donc nombreux. Ils comprennent notamment : a) la forme du masque peut être corrigée par modification de l'image calculée du masque qui est ensuite affichée sur l'écran transparent. Si les paramètres de l'optique sont modifiés, par exemple après une modification de l'ouverture du diaphragme ou de la valeur du zoom, le masque réalisé sur l'écran transparent peut être modifié en faisant évoluer ou modifiant l'image calculée b) la forme du masque peut être aussi modifiée ou bien la forme peut être déplacée sur l'écran transparent pour effectuer des réglages. Il n'y a plus alors de nécessité de positionner le projecteur, le masque et l'écran à leur position théorique, ce qui était nécessaire avec les anciennes méthodes, le masque étant calculé et réalisé pour des positions théoriques qui doivent être respectées lors de l'installation. Avantageusement la mise en place de la solution est considérablement facilitée.

Avantageusement, l'invention est utilisable dans les domaines de la projection professionnelle (réalité virtuelle, simulation) ou grand public de type évènementiel (« *projection mapping* », salons et conférences, musées), entre autres. Avantageusement, de manière générale, l'invention est utilisable pour tout raccord d'images entre plusieurs projecteurs projetant sur un même écran (systèmes de réalité virtuelle de type *reality centers*, ou de cinéma de type *géode* etc).

Il est divulgué un dispositif électro-optique pour fondu enchainé, comprenant une pluralité de vidéoprojecteurs, projetant des flux lumineux sur un écran passif commun, avec au moins une zone de recouvrement entre les flux lumineux; au moins un masque dynamique interposé entre au moins un des vidéoprojecteurs et l'écran passif commun, le masque dynamique étant constitué par l'affichage d'une image de masque sur un écran transparent et modifiant l'affichage de la zone de recouvrement, l'écran transparent étant courbe et/ou flexible.

Dans un développement, le masque dynamique est constitué par l'affichage d'une pluralité d'images de masque. La pluralité d'images peut correspondre à une succession d'images fixes ("*slideshow*") ou à une vidéo.

Dans un développement, l'image de masque est déterminée par la fourniture de paramètres optiques d'un vidéoprojecteur, tels qu'ouverture ou valeur de zoom et par les paramètres de positionnement physique du masque dynamique interposé.

Dans un développement, l'image de masque est déterminée par des moyens de calcul.

Dans un développement, le dispositif comprend en outre des moyens d'acquisition d'images capturant au moins une partie de la zone de recouvrement des flux lumineux.

Dans un développement, l'image de masque est déterminée en fonction des images capturées par les moyens d'acquisition d'images.

Dans un développement, l'image de masque est déterminée de façon à minimiser l'effet optique de noirs multiples et/ou de sur-luminosités dans la zone de recouvrement.

Dans un développement, le dispositif comprend une pluralité de masques dynamiques, les masques dynamiques étant associés aux vidéoprojecteurs.

Dans un développement, le dispositif est utilisé pour un simulateur de vol.

Il est également divulgué une méthode de correction d'affichage d'une zone de recouvrement entre au moins deux flux lumineux adjacents projetés sur un écran passif commun, comprenant l'affichage d'une ou plusieurs images de masque par un masque dynamique, le masque dynamique comprenant un écran transparent interposé entre au moins un des deux flux lumineux adjacents, l'écran transparent étant courbe et/ou flexible.

Dans un développement, au moins une image de masque est déterminée de façon à minimiser l'effet optique de noirs multiples et/ou de sur-luminosités dans la zone de recouvrement.

Dans un développement, au moins une image de masque est déterminée en fonction de la projection sur l'écran passif commun, ladite projection étant acquise par des moyens d'acquisition d'images.

Dans un développement, le dispositif comprend une pluralité de masques dynamiques.

Il est également divulgué un produit programme d'ordinateur, ledit programme d'ordinateur comprenant des instructions de code permettant d'effectuer les étapes du procédé selon l'une quelconque des étapes de la méthode lorsque ledit programme est exécuté sur un ordinateur.

### Description des figures

Différents aspects et avantages de l'invention vont apparaitre en appui de la description d'un mode préféré d'implémentation de l'invention mais non limitatif, avec référence aux figures ci-dessous :
La figure 1 est schéma illustrant la présence d'une zone de recouvrement lors de l'utilisation de plusieurs projecteurs;
Les figures 2A, 2B, 2C, 2D et 2E illustrent des exemples de réalisation de l'invention;

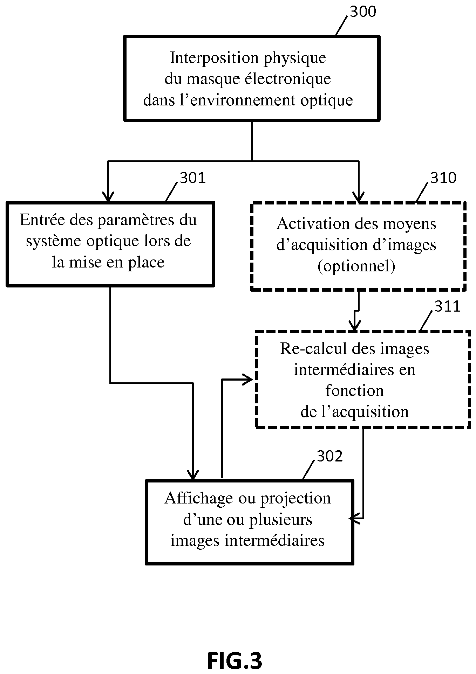

La figure 3 montre un exemple de procédé de calcul pour une mise en oeuvre de l'invention.

### Description détaillée de l'invention

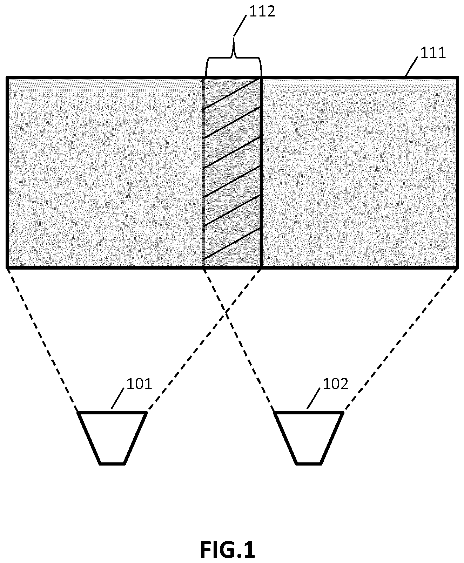

La figure 1 est schéma illustrant la présence d'une zone de recouvrement, zone fréquemment observée lors de l'utilisation de plusieurs projecteurs avec un seul et même écran. La figure 1 montre en effet deux projecteurs 101 et 102 projetant des images sur un écran 111. Les deux surfaces de projection se chevauchent sur une zone de recouvrement 112. Cette zone peut être sujette à des niveaux de luminosité trop élevés ou exposée au phénomène de "noirs multiples" lors de la projection d'images sombres.

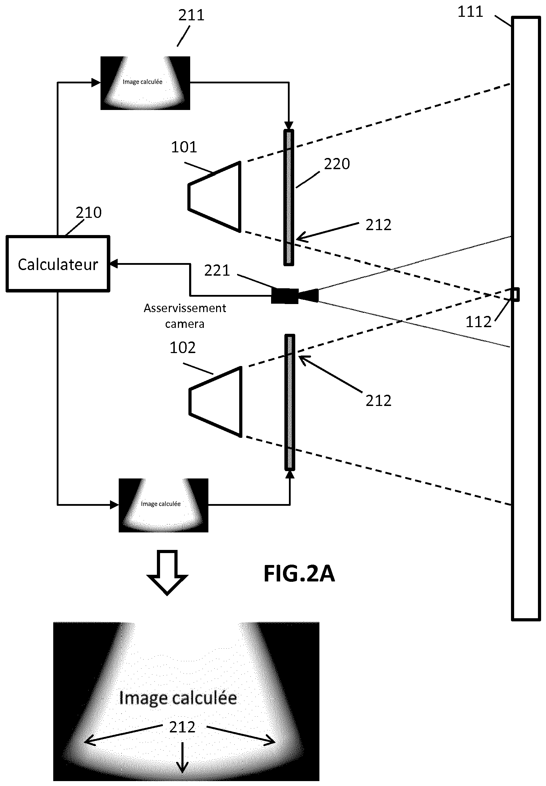

Les figures 2A à 2E illustrent différents exemples de réalisation de l'invention. La figure 2A illustre schématiquement un premier exemple de réalisation de l'invention, comprenant deux masques dynamiques selon l'invention. La figure montre le projecteur 101 tel que celui de la figure 1, un écran 211, deux masques dynamiques 220, un calculateur 210, une image calculée 211, des moyens d'acquisition d'images 221 (caméra).

Un ou plusieurs masques dynamiques 220 (par exemple des écrans transparents) sont installés devant l'optique du ou des projecteurs 101 et 102. Un calculateur 210 génère une ou plusieurs images (par exemple une image calculée 211 comportant des zones grisées occultantes 212 pour améliorer la zone de recouvrement). Cette ou ces images sont ensuite affichées sur le ou les masques dynamiques 220. L'image issue de chaque projecteur 101 (et 102) est alors projetée vers l'écran 111. Dans l'exemple de la figure 2A, les flux lumineux des projecteurs 101 et 102 sont modifiés du fait de la présence des masques dynamiques 220 qui affichent des séquences d'images ou des flux vidéo et les zones de recouvrement se trouvent par suite optimisées (par exemple la zone 112).

Dans un mode de réalisation particulier, chaque projecteur est associé à son propre masque dynamique. Cette configuration est représentée à la figure 2A. Alternativement chaque projecteur peut être associé avec une portion d'un unique masque dynamique e.g. un masque dynamique peut occulter plusieurs projecteurs simultanément (non représenté). La transparence/opacité étant configurable en tout point du masque dynamique, quasiment toutes les configurations de recouvrement peuvent être traitées.

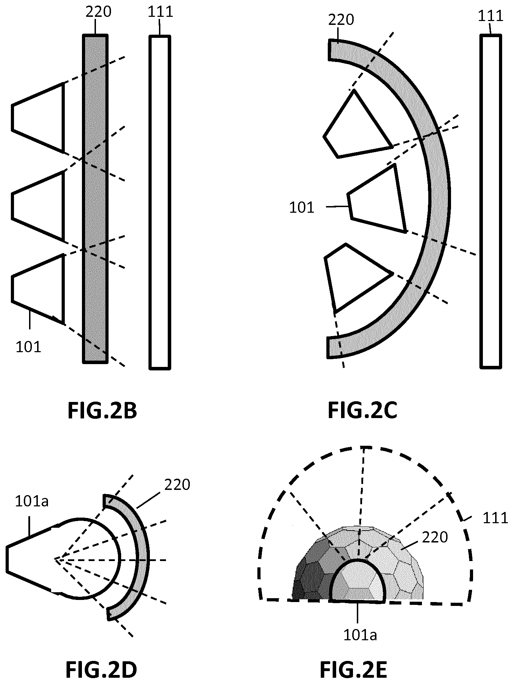

Dans un autre mode de réalisation, le masque dynamique est unique (ou bien il existe un ou plusieurs projecteurs dont la lumière n'est pas affectée par un ou plusieurs masques dynamiques). Cette configuration n'est pas représentée sur la figure 2. Dans cette configuration où un ou plusieurs projecteurs ne serait pas filtré ou partiellement occulté, il se pourrait qu'apparaissent des sur-luminosités qui ne pourraient pas être compensées (du fait de la propriété d'additivité des flux lumineux, i.e. il n'existe pas de luminosité "négative"). Néanmoins de tels événements restent peu probables, si bien que ce type de configuration (avec un ou plusieurs projecteurs non masqués) reste attractif (également en matière de coûts, de déploiement, etc). Par exemple, dans une configuration à deux projecteurs (dont l'un est masqué et l'autre pas), il resterait possible de sur-masquer (sur-filtrer, sur-occulter) un des deux flux lumineux de manière à obtenir une luminosité optimale sur la zone de recouvrement, quelle que soit la luminosité du projecteur non-masqué.

Sur l'exemple de la figure 2A, l'un "et/ou" l'autre des projecteurs 101 ou 102 peut donc être indifféremment utilisé, dans la mesure où le dispositif de masque dynamique va venir compenser l'affichage final. Deux masques dynamiques peuvent aussi être utilisés.

Les masques dynamiques peuvent généralement être utilisés simultanément. Dans certaines configurations, les masques dynamiques peuvent aussi être utilisés successivement ou alternativement. Les interactions qui interviennent entre les masques dynamiques (éventuellement de caractéristiques différentes par exemple, et/ou celles qui interviennent entre les masques dynamiques et le ou les calculateurs) permettent de multiples configurations (solution de repli si un masque devient inopérant, utilisation de masques à temps de latence différents, etc).

Concernant, le réglage du ou des masques, si les recouvrements d'images ne sont pas à la bonne luminosité, l'image du masque est alors soit déplacée, en déplaçant l'image sur l'écran, soit modifiée en recalculant une nouvelle image. Le déplacement peut être manuel (par molette par exemple) ou bien automatique (par reconnaissance d'images). Une boucle de rétroaction optionnelle peut aussi être effectuée.

Concernant le positionnement du ou des masques dynamiques: il se fait à un endroit (pratiquement) quelconque entre les projecteurs et l'écran 111: la flexibilité de l'affichage vidéo sur le masque dynamique permet d'adapter le masquage vidéo nécessaire. Plus précisément, le positionnement du ou des masques dynamiques s'effectue de manière à intercepter le flux lumineux en provenance du ou des projecteurs correspondants.

De manière optionnelle, une boucle de "rétroaction" ("asservissement", "boucle retour") est mise en oeuvre. Par exemple, dans ce mode particulier de mise en oeuvre, des moyens d'acquisition d'images 221 (par exemple une caméra ou un appareil photo numérique) capturent, à intervalles réguliers, de manière au moins intermittente, ou de manière "continue" (par exemple, en synchronisation avec le frame rate de la vidéo, ou bien encore à un taux plus rapide de façon à compenser les temps de latence de modification de l'affichage du masque dynamique), la projection qui est effectuée sur l'écran 111. Ces moyens d'acquisition d'images 221 peuvent être en communication avec le calculateur 210. Les informations acquises sont traitées par le calculateur de manière à adapter l'image calculée (ou les images calculées), servant de masque pour la projection.

Dans les configurations comportant une pluralité de masques dynamiques, une "coopération" entre les masques dynamiques peut également être mise en oeuvre (de manière optionnelle). Cette coopération ou interaction peut être directe ou indirecte. Les masques peuvent être individuellement asservis par le calculateur 210, de manière indépendante ou dépendante. Pour améliorer les temps de latence (par exemple), il est possible de faire coopérer les masques dynamiques entre eux de façon directe, i.e. sans nécessairement passer tous deux par l'entremise du calculateur. Il est donc possible d'asservir un des masques dynamiques au calculateur, lequel masque asservira directement un autre masque dynamique. D'autres schémas de régulation sont possibles. Par exemple, il pourra aussi avantageux de superposer plusieurs masques dynamiques de caractéristiques différentes (dans certains cas).

Dans un mode de mise en oeuvre sans asservissement (sans boucle retour 221), l'image ou la pluralité d'images est calculée en fonction de paramètres théoriques par un ordinateur (ou tout autre équivalent, comme une tablette par exemple). Concrètement, un étalonnage est effectué par un opérateur avant le début ou au cours de la projection. Par exemple, une image statique représentative d'une scène de nuit sera projetée, la zone de recouvrement et/ou le phénomène de "noirs multiples" sera appréhendé par l'opérateur, puis l'ensemble du système optique sera dimensionné de manière à minimiser ladite zone de recouvrement et ou le phénomène de "noirs multiples" (réglage de l'ouverture, placement du plan intermédiaire, optimisation du masque dynamique, i.e. de l'image calculée, etc.). Une fois ces réglages effectués, la configuration du système optique peut rester inchangée dans un mode de réalisation (au moins jusqu'à un déplacement éventuel du plan intermédiaire, auquel cas les réglages peuvent être effectués à nouveau).

Dans un mode de réalisation, le dispositif est un dispositif de fondu enchaîné entre plusieurs projecteurs. La méthode associée est implémentée dans ce dispositif et comprend une ou plusieurs des étapes suivantes:
- Les zones de raccordement d'image passent à travers un masque dynamique (e.g. écran transparent), lequel peut être plus ou moins opaque suivant le masque qui y est affiché;
- Le masque dynamique (de fondu enchaîné) est calculé et affiché électroniquement;
- Le masque dynamique (de fondu enchainé) est affiché (sur un écran transparent par exemple);
- Le masque dynamique est ajusté par modification du contenu de l'image (ou par un déplacement physique dans une autre configuration).

Dans un autre mode de mise en oeuvre, des moyens d'acquisition d'images 221 permettent un asservissement par une boucle retour pour adapter l'image intermédiaire (de manière continuelle, ou de façon intermittente, régulière ou irrégulière, i.e. par exemple en fonction du contenu des images projetées). Ce mode de réalisation présente l'avantage d'une flexibilité accrue (au regard d'un déplacement inopiné du plan intermédiaire par exemple et/ou l'adaptation aux différents contenus des images projetés par le projecteur 201).

Les figures 2B, 2C, 2D et 2E illustrent schématiquement d'autres exemples de configuration et soulignent certains aspects de l'invention. A la figure 2B, les projecteurs sont disposés côte-à-côte, et un unique masque dynamique intercepte les flux lumineux des projecteurs de façon à gérer la pluralité de zones de recouvrement. La figure 2C illustre le fait que le masque dynamique est "courbe" ou "flexible". Le figure 2D schématise l'emploi d'une optique *fish-eye* permettant des projections de type hémisphérique (par exemple pour des applications de type "planétarium" ou "parc d'attractions"). Dans ce cas, le masque dynamique peut être "englobant" (une forme sphéroïde peut être obtenue par assemblage de triangles ou de polyèdres, e.g. géodes en nid d'abeille, géodes par triangulation, etc). La figure 2E schématise une telle configuration: les moyens de projection 101a sont situés de manière centrale, puis filtrée masquée par le ou les masques dynamiques assemblés par triangulation ou polyèdres 220. Dans une géode, les projecteurs peuvent aussi être disposés le long du périmètre à la base de la géode et dans ce cas l'emploi d'une pluralité de masques individuels peut être suffisant.

La figure trois illustre un exemple du procédé selon l'invention. Une première étape d'interposition physique du masque dynamique dans l'environnement optique est effectuée (étape 300).

Dans le premier mode de réalisation (sans boucle retour), une étape 301 d'entrée des paramètres du système optique (tel que réglage de l'ouverture, placement du plan intermédiaire, optimisation du masque dynamique, i.e. de l'image calculée, etc.) est effectuée. S'ensuit une étape 302 d'affichage (ou de projection) d'une ou plusieurs images intermédiaires.

Dans le second mode de réalisation (avec boucle retour), une étape 310 d'activation des moyens d'acquisition d'images est optionnellement effectuée. Ensuite, à l'étape 311, les images intermédiaires sont calculées à nouveau (de manière régulière ou irrégulière ou intermittente ou continue), en fonction des informations capturées par les moyens d'acquisition d'images. Enfin, les des images intermédiaires résultantes sont affichées ou projetées à l'étape 302.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique, électromagnétique ou être un support de diffusion de type infrarouge.

## Revendications

1. Dispositif électro-optique pour fondu enchainé, comprenant:
- une pluralité de vidéoprojecteurs (101, 102), projetant des flux lumineux sur un écran passif commun (111), avec au moins une zone de recouvrement (112) entre les flux lumineux;
- au moins un masque dynamique (220) interposé entre au moins un des vidéoprojecteurs (101, 102) et l'écran passif commun (111), le masque dynamique étant constitué par l'affichage d'une image de masque (211) sur un écran transparent (220) de façon à obtenir une luminosité optimale de l'affichage de la zone de recouvrement (122) ;
- l'écran transparent (220) étant courbe et/ou flexible.

2. Dispositif selon la revendication 1, le masque dynamique étant constitué par l'affichage d'une pluralité d'images de masque.

3. Dispositif selon les revendications 1 à 2, l'image de masque étant déterminée par la fourniture de paramètres optiques d'un vidéoprojecteur, tels qu'ouverture ou valeur de zoom et par les paramètres de positionnement physique du masque dynamique interposé.

4. Dispositif selon les revendications 1 à 3, l'image de masque étant déterminée par des moyens de calcul.

5. Dispositif selon l'une quelconque des revendications précédentes, comprenant en outre des moyens d'acquisition d'images capturant au moins une partie de la zone de recouvrement des flux lumineux.

6. Dispositif selon la revendication 5, l'image de masque étant déterminée en fonction des images capturées par les moyens d'acquisition d'images.

7. Dispositif selon la revendication 6, l'image de masque étant déterminée de façon à minimiser l'effet optique de noirs multiples et/ou de sur-luminosités dans la zone de recouvrement.

8. Dispositif selon l'une quelconque des revendications précédentes comprenant une pluralité de masques dynamiques, les masques dynamiques étant associés aux vidéoprojecteurs.

9. Utilisation du dispositif selon l'une quelconque des revendications précédentes pour un simulateur de vol.

10. Méthode de correction d'affichage d'une zone de recouvrement (112) entre au moins deux flux lumineux adjacents projetés sur un écran passif commun (111), comprenant l'affichage d'une ou plusieurs images de masque (211) par un masque dynamique de façon à obtenir une luminosité optimale de l'affichage de la zone de recouvrement (112); le masque dynamique comprenant un écran transparent (220) interposé entre au moins un des deux flux lumineux adjacents, l'écran transparent (220) étant courbe et/ou flexible.

11. Méthode selon la revendication 10, au moins une image de masque étant déterminée de façon à minimiser l'effet optique de noirs multiples et/ou de sur-luminosités dans la zone de recouvrement.

12. Méthode selon les revendications 10 ou 11, au moins une image de masque étant déterminée en fonction de la projection sur l'écran passif commun, ladite projection étant acquise par des moyens d'acquisition d'images.

13. Méthode selon les revendications 10 à 12, comprenant une pluralité de masques dynamiques.

14. Un produit programme d'ordinateur, ledit programme d'ordinateur comprenant des instructions de code permettant d'effectuer les étapes du procédé selon l'une quelconque des revendications 10 à 13, lorsque ledit programme est exécuté sur un ordinateur.

## Patentansprüche

1. Elektrooptische Vorrichtung zum Überblenden, Folgendes beinhaltend:
- eine Vielzahl von Videoprojektoren (101, 102), welche Lichtströme auf einen gemeinsamen passiven Bildschirm (111) projizieren, mit mindestens einem Überlappungsbereich (112) zwischen den Lichtströmen;
- mindestens eine dynamische Maske (220), welche zwischen mindestens einem der Videoprojektoren (101, 102) und dem gemeinsamen passiven Bildschirm (111) zwischengeschaltet ist, wobei die dynamische Maske durch die Anzeige eines Maskenbildes (211) auf einem durchsichtigen Bildschirm (220) in der Weise gebildet wird, dass eine optimale Helligkeit der Anzeige des Überlappungsbereichs (122) erzielt wird
- wobei der durchsichtige Bildschirm (220) gekrümmt und/oder biegsam ist.

2. Vorrichtung nach Anspruch 1, bei welcher die dynamische Maske durch die Anzeige einer Vielzahl von Maskenbildern gebildet wird.

3. Vorrichtung nach den Ansprüchen 1 bis 2, bei welcher das Maskenbild durch die Bereitstellung optischer Parameter eines Videoprojektors wie Öffnung oder Zoom-Wert und durch die physischen Positionierungsparameter der zwischengeschalteten dynamischen Maske bestimmt wird.

4. Vorrichtung nach den Ansprüchen 1 bis 3, bei welcher das Maskenbild durch Berechnungsmittel bestimmt wird.

5. Vorrichtung nach einem der vorhergehenden Ansprüche, welche zudem Bilderfassungsmittel beinhaltet, welche mindestens einen Teil des Überlappungsbereichs der Lichtströme erfassen.

6. Vorrichtung nach Anspruch 5, bei welcher das Maskenbild abhängig von den durch die Bilderfassungsmittel erfassten Bildern bestimmt wird.

7. Vorrichtung nach Anspruch 6, bei welcher das Maskenbild so bestimmt wird, dass der optische Effekt multipler Schwarz-Bereiche und/oder übermäßig heller Bereiche im Überlappungsbereich vermieden wird.

8. Vorrichtung nach einem der vorhergehenden Ansprüche, welche eine Vielzahl von dynamischen Masken beinhaltet, wobei die dynamischen Masken mit den Videoprojektoren assoziiert sind.

9. Verwendung der Vorrichtung nach einem der vorhergehenden Ansprüche für einen Flugsimulator.

10. Verfahren zur Anzeigekorrektur eines Überlappungsbereichs (112) zwischen mindestens zwei benachbarten Lichtströmen, welche auf einen gemeinsamen passiven Bildschirm (111) projiziert werden, umfassend die Anzeige eines oder mehrerer Maskenbilder (211) durch eine dynamische Maske in der Weise, dass eine optimale Helligkeit der Anzeige des Überlappungsbereichs (112) erzielt wird;
wobei die dynamische Maske einen durchsichtigen Bildschirm (220) beinhaltet, der zwischen mindestens einem der beiden benachbarten Lichtströme zwischengeschaltet ist, wobei der durchsichtige Bildschirm (220) gekrümmt und/oder biegsam ist.

11. Verfahren nach Anspruch 10, bei welchem mindestens ein Maskenbild so bestimmt wird, dass der optische Effekt multipler Schwarz-Bereiche und/oder übermäßig heller Bereiche im Überlappungsbereich vermieden wird.

12. Verfahren nach den Ansprüchen 10 oder 11, wobei mindestens ein Maskenbild abhängig von der Projektion auf den gemeinsamen passiven Bildschirm bestimmt wird, wobei die Projektion durch Bilderfassungsmittel erfasst wird.

13. Verfahren nach den Ansprüchen 10 bis 12, welches eine Vielzahl von dynamischen Masken umfasst.

14. Computerprogrammprodukt, wobei das Computerprogramm Code-Befehle beinhaltet, welche es ermöglichen, die Schritte des Verfahrens nach einem der Ansprüche 10 bis 13 durchzuführen, wenn das Programm auf einem Computer ausgeführt wird.

## Claims

1. An electro-optical device for cross-fading, comprising:
- a plurality of video projectors (101, 102) projecting luminous fluxes on a common passive screen (111), with at least one coverage zone (112) between the luminous fluxes;
- at least one dynamic mask (220) interposed between at least one of the video projectors (101, 102) and the common passive screen (111), the dynamic mask being formed by displaying a mask image (211) on a transparent screen (220) in order to obtain an optimal luminosity of the display of the coverage zone (122);
- the transparent screen (220) being curved and/or flexible.

2. The device as claimed in claim 1, the dynamic mask being formed by displaying a plurality of mask images.

3. The device as claimed in claims 1 to 2, the mask image being determined by supplying optical parameters of a video projector, such as aperture or zoom value, and by the physical positioning parameters of the interposed dynamic mask.

4. The device as claimed in claims 1 to 3, the mask image being determined by computation means.

5. The device as claimed in any one of the preceding claims, further comprising image acquisition means capturing at least one part of the coverage zone of the luminous fluxes.

6. The device as claimed in claim 5, the mask image being determined depending on images captured by the image acquisition means.

7. The device as claimed in claim 6, the mask image being determined in order to minimise the optical effect of multiple black spots and/or of over-luminosity phenomena in the coverage zone.

8. The device as claimed in any one of the preceding claims, comprising a plurality of dynamic masks, the dynamic masks being associated with the video projectors.

9. Use of the device as claimed in any one of the preceding claims for a flight simulator.

10. A method for correcting the display of a coverage zone (112) between at least two adjacent luminous fluxes projected on a common passive screen (111), comprising displaying one or more mask images (211) through a dynamic mask in order to obtain an optimal luminosity of the display of the coverage zone (112);
the dynamic mask comprising a transparent screen (220) interposed between at least one of the two adjacent luminous fluxes, the transparent screen (220) being curved and/or flexible.

11. The method as claimed in claim 10, at least one mask image being determined in order to minimise the optical effect of multiple black spots and/or of over-luminosity phenomena in the coverage zone.

12. The method as claimed in claims 10 or 11, at least one mask image being determined depending on the projection on the common passive screen, said projection being acquired by image acquisition means.

13. The method as claimed in claims 10 to 12, comprising a plurality of dynamic masks.

14. A computer program product, said computer program comprising code instructions allowing the steps of the method as claimed in any one of claims 10 to 13 to be performed when said program is executed on a computer.
